# EUROPÄISCHE PATENTSCHRIFT

(11) **EP 1 930 609 B1**
(45) Veröffentlichungstag und Bekanntmachung des Hinweises auf die Patenterteilung: **03.10.2018**
(21) Anmeldenummer: 07023002.4
(22) Anmeldetag: 28.11.2007
(51) Int. Cl.: F16C 19/46, F16C 21/00, F16C 33/78

(54) **WÄLZLAGER ZUR DREHBAREN LAGERUNG EINES ZAPFENS**
ROLLER BEARING FOR ROTATABLY SUPPORTING A PIVOT PIN
PALIER À ROULEMENT POUR LE SUPPORT EN ROTATION D'UN PIVOT

(30) Priorität: 04.12.2006 DE 102006057411
(43) Veröffentlichungstag der Anmeldung: 11.06.2008
(73) Patentinhaber: AB SKF, 415 50 Göteborg (SE)
(72) Erfinder: Bauer, Bernhard, 97437 Haßfurt (DE); Gebauer, Horst, 97529 Sulzheim (DE)
(74) Vertreter: Kohl, Thomas

(56) Entgegenhaltungen:
- DE-A1- 19 701 461
- DE-B- 1 206 218
- DE-U1- 8 430 909
- DE-U1- 8 631 594

## Beschreibung

Die Erfindung betrifft ein Wälzlager zur drehbaren Lagerung eines Zapfens. Weiterhin betrifft die Erfindung eine Lageranordnung, ein Drehgelenk mit mehreren Lageranordnungen und ein Verfahren zur Montage eines Wälzlagers auf einem Zapfen.
Wälzlager zur Lagerung eines Zapfens werden insbesondere bei Kreuzgelenken eingesetzt, mit denen eine drehfeste gelenkige Verbindung zwischen zwei Maschinenteilen, beispielsweise zwei Wellen, ausgebildet werden kann. Ein derartiges Kreuzgelenk weist in der Regel ein Zapfenkreuz mit vier Zapfen auf, die in je einem Wälzlager gelagert sind. Die Wälzlager je zweier gegenüberliegender Zapfen können in ein gabelförmiges Endstück je eines Maschinenteils eingelassen sein, wobei die gabelförmigen Endstücke der beiden Maschinenteile um 90° gegeneinander verdreht angeordnet sind.
Bei einem derartigen Kreuzgelenk ist konstruktionsbedingt jeweils zwischen dem Wälzlager und dem darin gelagerten Zapfen ein Spalt vorhandenen. Um eine dauerhafte Funktionsfähigkeit des Kreuzgelenks zu gewährleisten, ist es erforderlich, die Spalte zuverlässig abzudichten. Die dabei jeweils eingesetzte Dichtungsanordnung soll zum einen ein Austreten des innerhalb des Lagers vorgehaltenen Schmiermittels verhindern und zum anderen ein Eindringen von Verunreinigungen aus der Umgebung in das Innere der Lagerbüchse ausschließen oder zumindest auf ein vertretbares Maß reduzieren. Dies ist insbesondere dann wichtig, wenn die Wälzlager jeweils mit einer Lebensdauerschmierung versehen werden, die über die gesamte vorgesehene Nutzungszeit eine ausreichende Schmierwirkung gewährleisten muss.

Es sind bereits Wälzlager mit sehr hochwertigen Dichtungsanordnungen bekannt, die sehr hohe Ansprüche hinsichtlich einer zuverlässigen und dauerhaften Abdichtung erfüllen. So offenbart die DE 10 2005 016 215 A1 eine Lagervorrichtung mit einer Lagerbüchse zur drehbaren Lagerung eines Zapfens und einer Dichtungsanordnung zur Abdichtung eines Spalts zwischen der Lagerbüchse und dem Zapfen. Die Dichtungsanordnung weist einen inneren und einen äußeren Dichtring auf, die im Bereich des Spalts axial nebeneinander angeordnet sind. Auf den inneren Dichtring, der drehfest mit der Lagerbüchse verbunden ist, stützt sich eine Tellerfeder axial ab. An der Tellerfeder laufen in der Lagerbüchse angeordnete Wälzkörper axial an. Dabei ist die Tellerfeder so angeordnet, dass der axiale Abstand zwischen der Tellerfeder und den Wälzkörpern radial nach außen zunimmt.

Weiterhin ist aus der DE 86 31 594.3 U eine spielfreie Lagerbüchse bekannt, bei der der Spalt zwischen der Lagerbüchse und dem Zapfen lediglich mittels eines einzigen Dichtrings abgedichtet wird. Der Dichtring ist drehfest mit dem Zapfen verbunden. Axial neben dem Dichtring ist eine Tellerfeder angeordnet, an der in der Lagerbüchse angeordnete Wälzkörper axial anlaufen und die sich axial auf einer Schulter des Zapfens abstützt. Die Tellerfeder ist so angeordnet, dass der axiale Abstand zwischen der Tellerfeder und den Wälzkörpern radial nach außen abnimmt.

Der Erfindung liegt die Aufgabe zu Grunde, ein Wälzlager zur Lagerung eines Zapfens so auszubilden, dass mit möglichst geringem Aufwand eine zuverlässige Abdichtung des Spalts zwischen dem Wälzlager und dem Zapfen erzielbar ist. Diese Aufgabe wird durch ein Wälzlager mit der Merkmalskombination des Anspruchs 1 gelöst.
Das erfindungsgemäße Wälzlager zur drehbaren Lagerung eines Zapfens weist eine Hülse, Wälzkörper, die in der Hülse abrollen, einen Dichtring und eine Tellerfeder auf, an der die Wälzkörper axial anlaufen und die sich auf den Dichtring axial abstützt. Die Besonderheit des erfindungsgemäßen Wälzlagers besteht darin, dass der Dichtring eine Sitzfläche für eine drehfeste Anordnung des Dichtrings auf dem Zapfen aufweist und der axiale Abstand zwischen der Tellerfeder und den Wälzkörpern radial nach außen wenigstens bereichsweise abnimmt.
Die Erfindung hat den Vorteil, dass sie eine zuverlässige Abdichtung des Spalts zwischen dem Wälzlager und dem Zapfen gewährleistet, wobei die für die Abdichtung erforderlichen konstruktiven Elemente einen vergleichsweise geringen Aufwand erfordern. Durch die erfindungsgemäße Ausbildung der Tellerfeder wird eine Konstruktion ermöglicht, die es zum einen erlaubt, dass sich die Tellerfeder auf den Dichtring abstützt und die zum anderen mit einem einzigen Dichtring eine hohe Dichtwirkung erreicht. Die Abstützung der Tellerfeder auf den Dichtring bringt bei der Montage des Wälzlagers erhebliche Vorteile, hat bei bekannten Konstruktionen aber zur Folge, dass mehrere hintereinander geschaltete Dichtringe für eine zuverlässige Abdichtung benötigt werden. Dies beruht hauptsächlich darauf, dass eine gute Dichtwirkung erzielt werden kann, wenn eine oder mehrere Dichtlippen des Dichtrings an der Hülse anlaufen. Der Bereich der Dichtlippen eignet sich jedoch mangels mechanischer Stabilität nicht sehr gut für die Abstützung der Tellerfeder, so dass die bekannten Konstruktionen, bei denen der Abstand zwischen der Tellerfeder und den Wälzkörpern radial nach außen zunimmt, einen zusätzlichen Dichtring oder sonstige Maßnahmen für die Abstützung der Tellerfeder erfordern.

Der Dichtring weist vorzugsweise einen Dichtkörper und einen Stützring auf. Auf diese Weise bestehen große Freiheiten bei der Optimierung des Zusammenspiels zwischen den Dichteigenschaften und der mechanischen Stabilität des Dichtrings. Bei einem bevorzugten Ausführungsbeispiel des erfindungsgemäßen Wälzlagers liegt die Tellerfeder berührend am Stützring an. Dies hat den Vorteil, dass der Dichtkörper nicht durch die mechanische Einwirkung der Tellerfeder beschädigt wird. Ein weiterer Vorteil besteht darin, dass die Abstützposition der Tellerfeder und damit deren Vorspannung mit relativ geringen Toleranzen eingestellt werden kann, da der Stützring wesentlich weniger nachgibt als der Dichtkörper.

Der Stützring weist vorzugsweise einen ersten Rohrabschnitt auf. Dies verleiht dem Stützring eine hohe mechanische Stabilität in Axialrichtung, in der die Tellerfeder am stärksten auf den Dichtring einwirkt. Am ersten Rohrabschnitt kann ein radial auswärts gerichteter erster Flansch und/oder ein radial einwärts gerichteter zweiter Flansch ausgebildet sein. Der erste Flansch kann wenigstens in einem Teilbereich seiner radialen Erstreckung außen am Dichtkörper angeordnet sein, wobei der Teilbereich vorzugsweise größer als die halbe radiale Erstreckung des ersten Flansches ist. Dies hat den Vorteil dass der weiche Dichtkörper in diesem Teilbereich durch den harten Stützring geschützt wird. Die Tellerfeder liegt vorzugsweise am zweiten Flansch berührend an. Dadurch ergibt sich eine günstige Anlagefläche für die Tellerfeder. Vorzugsweise weist der Stützring einen zweiten Rohrabschnitt auf.

Die gewünschten Eigenschaften des Stützrings lassen sich besonders gut realisieren, wenn der Stützring aus Metall gefertigt ist.

Bei einem bevorzugten Ausführungsbeispiel des erfindungsgemäßen Wälzlagers weist die Tellerfeder einen abgewinkelten Radialbereich auf. Der abgewinkelte Radialbereich erstreckt sich vorzugsweise bis zum maximalen Radius der Tellerfeder. Insbesondere laufen die Wälzkörper im Bereich des abgewinkelten Radialbereichs axial an der Tellerfeder an. Durch diese konstruktiven Maßnahmen lässt sich ein gutes Anlaufverhalten zwischen den Wälzkörpern und der Tellerfeder erzielen und dadurch der Verschleiß gering halten.
Der Dichtring kann verliersicher an der Hülse angebracht sein. Dadurch vereinfacht sich die Handhabung des Wälzlagers und dessen Montage.

Erfindungsgemäß weist der Dichtring eine Sitzfläche für eine drehfeste Anordnung des Dichtrings auf dem Zapfen auf. Dies hat den Vorteil, dass eine zuverlässige Abstützung der Tellerfeder auf dem Dichtring auch bei einer vergleichsweise hohen Vorspannung der Tellerfeder möglich ist, da die Abstützung in der Nähe des Sitzes erfolgt.
Weiterhin ist es vorteilhaft, wenn der Dichtring wenigstens eine äußere Dichtlippe aufweist, die außen an der Hülse anläuft und wenigstens eine innere Dichtlippe, die innen an der Hülse anläuft. Auf diese Weise lässt sich eine sehr hohe Dichtwirkung erzielen. Eine weitere Verbesserung der Dichtwirkung und zudem eine Erleichterung der Montage lässt sich dadurch erreichen, dass der Dichtring einen axialen Vorsprung aufweist, der axial an der Hülse anliegt.
Die Erfindung bezieht sich weiterhin auf eine Lageranordnung mit einer Hülse, einem Zapfen, der in der Hülse drehbar gelagert ist, Wälzkörpern, die zwischen der Hülse und dem Zapfen abrollen, einem Dichtring und einer Tellerfeder, die unter einer Vorspannung axial zwischen dem Dichtring und den Wälzkörpern eingespannt ist und die sich auf den Dichtring axial abstützt. Die erfindungsgemäße Lageranordnung zeichnet sich dadurch aus, dass der Dichtring dichtend und drehfest mit dem Zapfen verbunden ist und der axiale Abstand zwischen der Tellerfeder und den Wälzkörpern radial nach außen wenigstens bereichsweise abnimmt.

Desweiteren bezieht sich die Erfindung auf ein Drehgelenk, das mehrere derartige Lagervorrichtungen aufweist, in denen je ein Zapfen drehbar gelagert ist.
Zudem bezieht sich die Erfindung auf Verfahren zur Montage eines Wälzlagers, das eine Hülse, Wälzkörper, einen Dichtring, der verliersicher an der Hülse angebracht ist, und eine Tellerfeder aufweist, auf einem Zapfen, wobei der Zapfen in die Hülse eingeführt wird. Das erfindungsgemäße Verfahren zeichnet sich dadurch aus, dass die Tellerfeder bei der Annäherung des Dichtrings an eine vorgegebene Sitzposition auf dem Zapfen, in der eine drehfeste und dichtende Fixierung des Dichtrings am Zapfen erreicht wird, durch eine mechanische Einwirkung des Dichtrings auf die Tellerfeder zunehmend gestaucht wird.
Das erfindungsgemäße Verfahren hat den Vorteil, dass für die Montage des Wälzlagers ein sehr geringer Handhabungsaufwand erforderlich ist. Vorzugsweise wird durch die Stauchung der Tellerfeder eine vorgegebene Vorspannung eingestellt. Dies hat den Vorteil, dass die Tellerfeder auf sehr einfache Weise mit einer definierten Vorspannung montiert werden kann.
Die Erfindung wird nachstehend anhand der in der Zeichnung dargestellten Figuren näher erläutert.
Es zeigen:
- Figur 1: ein Kreuzgelenk mit einem Ausführungsbeispiel einer erfindungsgemäß ausgebildeten Lagervorrichtung in einer Schnittdarstellung und
- Figur 2: einen vergrößerten Ausschnitt der Figur 1 im Bereich der Dichtungsanordnung.

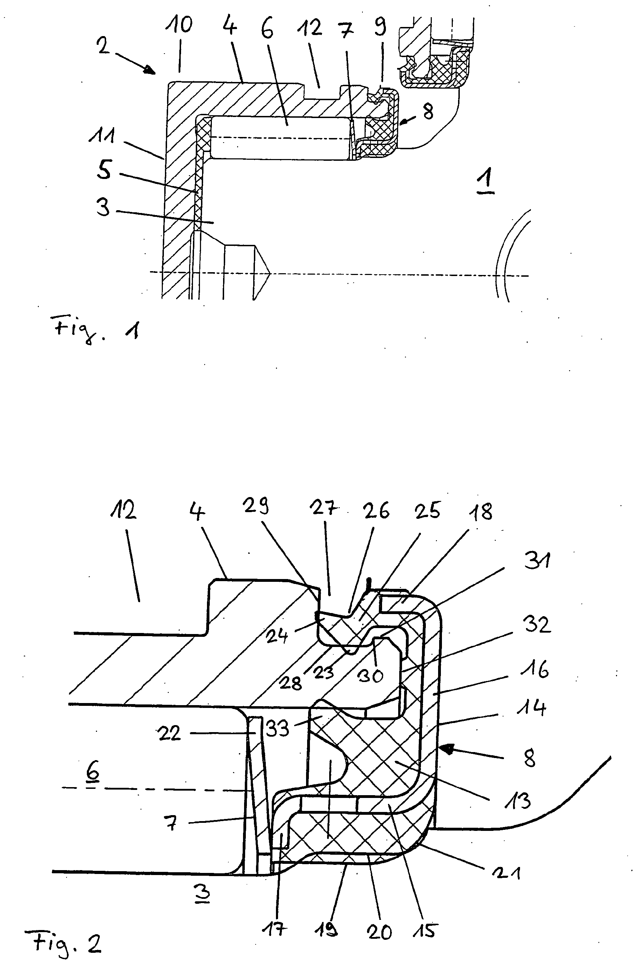

Figur 1 zeigt ein Zapfenkreuz 1 mit einem Ausführungsbeispiel eines erfindungsgemäß ausgebildeten Wälzlagers 2 in Schnittdarstellung. Das Zapfenkreuz 1 ist lediglich ausschnittsweise dargestellt und weist vier Zapfen 3 auf, die in je einem Wälzlager 2 drehbar gelagert sind. Die folgende Beschreibung bezieht sich auf die Lagerung eines der Zapfens 3 in einem der Wälzlager 2. Dies bedeutet, dass die im folgenden beschriebene Einheit pro Zapfenkreuz 1 viermal vorhanden ist.

Das Wälzlager 2 weist eine zylindrische Hülse 4, eine Anlaufscheibe 5, einen Satz zylindrischer Wälzkörper 6, eine Tellerfeder 7 und einen Dichtring 8 auf.

Die Hülse 4 weist ein offenes axiales Ende 9 und ein geschlossenes axiales Ende 10 auf. In das offene axiale Ende 9 der Hülse 4 ist der Zapfen 3 eingeführt. Im Bereich des geschlossenen axialen Endes 10 der Hülse 4 ist ein Boden 11 ausgebildet. Auf der Mantelfläche der Hülse 4 ist eine umlaufende Haltenut 12 ausgebildet, die Befestigungszwecken dient und in die beispielsweise ein Federring eingeschnappt werden kann.

Die Anlaufscheibe 5 ist beispielsweise aus Kunststoff gefertigt und liegt am Boden 11 der Hülse 4 an. An der Anlaufscheibe 5 laufen die Wälzkörper 6 und der Zapfen 3 axial an. Weiterhin rollen die Wälzkörper 6 zwischen der Hülse 4 und dem Zapfen 3 ab und werden dabei durch ein nicht figürlich dargestelltes Schmiermittel geschmiert.

Die Tellerfeder 7 ist unter einer Vorspannung axial zwischen den Wälzkörpern 6 und dem Dichtring 8 eingespannt, so dass die Wälzkörper 6 axial an der Tellerfeder 7 anlaufen.

Der Dichtring 8 ist drehfest und dichtend mit dem Zapfen 3 verbunden und liegt an mehreren Stellen dichtend an der Hülse 4 an. Einzelheiten bzgl. des Aufbaus und der Anordnung des Dichtrings 8 werden anhand von Figur 2 erläutert.

Figur 2 zeigt einen vergrößerten Ausschnitt der Figur 1 im Bereich des Dichtrings 8. Der Dichtring 8 weist einen Dichtkörper 13 und einen Stützring 14 auf, der teils innerhalb des Dichtkörpers 13 angeordnet ist und teils entlang der Oberfläche des Dichtkörpers 13 verläuft.

Beim dargestellten Ausführungsbeispiel ist der Stützring 14 dreifach um jeweils ca. 90° abgekantet und weist einen inneren Rohrabschnitt 15 auf, der parallel zur Axialrichtung des Wälzlagers 2 orientiert ist. An einem axialen Ende des inneren Rohrabschnitts 15 ist ein radial auswärts gerichteter äußerer Flansch 16 ausgebildet. Am anderen axialen Ende des inneren Rohrabschnitts 15 ist ein radial einwärts gerichteter innerer Flansch 17 ausgebildet. Die radiale Erstreckung des inneren Flansches 17 ist erheblich kleiner als die radiale Erstreckung des äußeren Flansches 16. In seinem äußeren Radialbereich weist der äußere Flansch 16 einen äußeren Rohrabschnitt 18 auf, der sich zur gleichen Axialseite des äußeren Flansches 16 erstreckt wie der innere Rohrabschnitt 15.

Der äußere Flansch 16 des Stützrings 14 ist in einem Teilbereich, der vorzugsweise größer als die halbe radiale Erstreckung des äußeren Flansches 16 ist, außen am Dichtkörper 13 angeordnet. Beim dargestellten Ausführungsbeispiel deckt der äußere Flansch 16 eine vom Wälzlager 2 weg gerichtete Axialseite des Dichtkörpers 13 fast vollständig ab. Der äußere Rohrabschnitt 18 des Stützrings 14 verläuft nahe der maximalen radialen Erstreckung des Dichtkörpers 13 innerhalb des Dichtkörpers 13. Der innere Rohrabschnitt 15 des Stützrings 14 erstreckt sich in Axialrichtung des Wälzlagers 2 quer durch den gesamten Dichtkörper 13 und ist näher zum Zapfen 3 als zur Hülse 4 angeordnet. Der innere Flansch 17 des Stützrings 14 deckt eine zum Wälzlager 2 hin gerichtete Axialseite des Dichtkörpers 13 teilweise ab.

Der Dichtkörper 13 ist vorzugsweise aus Viton oder einem anderen Elastomermaterial hergestellt. Der Stützring 14 ist vorzugsweise aus Metall oder einem formstabilen Kunststoff hergestellt.

Im Bereich seines Innenumfangs ist am Dichtkörper 13 eine Sitzfläche 19 ausgebildet, die im montierten Zustand des Wälzlagers 2 an einer Gegenfläche 20 des Zapfens 3 anliegt. Durch eine radiale Überdeckung zwischen dem Dichtkörper 13 und dem Zapfen 3 im Bereich der Sitzfläche 19 wird eine drehfeste und dichtende Fixierung des Dichtrings 8 am Zapfen 3 erreicht. Eine zuverlässige Fixierung in einer axialen Richtung wird durch eine Schulter 21 des Zapfens 3 erreicht, an der der Stützkörper 13 axial anliegt. In der entgegen gesetzten axialen Richtung wird die Beweglichkeit des Dichtrings 8 durch die Tellerfeder 7 eingeschränkt, die axial am inneren Flansch 17 des Stützrings 14 anliegt.

Die Tellerfeder 7 nähert sich radial auswärts zunehmend an die Wälzkörper 6 an und ist im montierten Zustand des Wälzlagers 2 in einem spitzen Winkel zur Radialrichtung des Wälzlagers 2 orientiert. Um ein möglichst optimales Anlaufverhalten der Wälzkörper 6 an der Tellerfeder 7 zu erzielen, weist die Tellerfeder 7 einen abgewinkelten Radialbereich 22 auf, der sich bis zum maximalen Radius der Tellerfeder 7 erstreckt. Der abgewinkelte Radialbereich 22 ist so auf die Schrägstellung der Tellerfeder 7 im montierten Zustand des Wälzlagers 2 abgestimmt, dass er ungefähr parallel zu den daran anlaufenden Stirnflächen der Wälzkörper 6 ausgerichtet ist.

Der Dichtring 8 weist weiterhin eine radiale äußere Dichtlippe 23 und eine axiale äußere Dichtlippe 24 auf, die Bestandteile eines im Bereich des Außenumfangs des Dichtrings 8 ausgebildeten axialen Fortsatzes 25 des Dichtkörpers 13 sind. Die radiale äußere Dichtlippe 23, die näher am offenen axialen Ende 9 der Hülse 4 angeordnet und mechanisch stabiler ausgebildet ist als die axiale äußere Dichtlippe 24, erstreckt sich bezüglich der Radialrichtung nach innen. Vorzugsweise ist die radiale äußere Dichtlippe 23 allerdings nicht exakt parallel zur Radialrichtung orientiert, sondern schließt mit dieser einen Winkel ein. Die axiale äußere Dichtlippe 24 ist am freien Ende des axialen Fortsatzes 25 des Dichtkörpers 13 ausgebildet und bezüglich der Radialrichtung schräg nach außen orientiert. Vorzugsweise wird die Orientierung dabei so gewählt, dass sie näher an der Axialrichtung als an der Radialrichtung liegt. In dem Bereich, in dem die beiden äußeren Dichtlippen 23 und 24 ausgebildet sind, weist der Dichtkörper 13 an seinem Außenumfang eine umlaufende Vertiefung 26 auf, die beim dargestellten Ausführungsbeispiel einen V-förmigen Querschnitt besitzt.

Die beiden äußeren Dichtlippen 23 und 24 liegen jeweils im Bereich einer am Außenumfang der Hülse 4 ausgebildeten Dichtnut 27 an der Hülse 4 an. Die Dichtnut 27 weist beim dargestellten Ausführungsbeispiel einen rechteckigen Querschnitt auf, der durch einen Nutboden 28, eine erste Nutseitenwand 29 und eine zweite Nutseitenwand 30 definiert wird. Die Übergangsbereiche zwischen dem Nutboden 28 und den Nutseitenwänden 29 und 30 der Dichtnut 27 sind jeweils abgerundet. Die erste Nutseitenwand 29 ist auf der vom offen axialen Ende 9 der Hülse 4 abgewandten Seite des Nutbodens 28 angeordnet und besitzt eine wesentlich größere radiale Erstreckung als die zweite Nutseitenwand 30, die auf der dem offenen axialen Ende 9 der Hülse 4 zugewandten Seite des Nutbodens 28 angeordnet ist. Die zweite Nutseitenwand 30 wird durch einen Radialvorsprung 31 ausgebildet, der axial zwischen dem Nutboden 28 und dem offenen axialen Ende 9 der Hülse 4 angeordnet ist. Durch den Radialvorsprung 31 ist der Dichtring 8 verliersicher an der Hülse 4 fixiert, wenn der Zapfen 3 nicht in die Hülse 4 eingeführt ist. Dadurch besteht die Möglichkeit, die Hülse 4 und den Dichtring 8 als eine Einheit zu handhaben.

Die radiale äußere Dichtlippe 23 liegt am Nutboden 28 an. Die axiale äußere Dichtlippe 24 liegt an der ersten Nutseitenwand 29 an. Dadurch wird eine hohe Dichtwirkung erreicht, die auch dann noch gewährleistet ist, wenn beispielsweise Wasser oder eine andere Flüssigkeit unter hohem Druck auf den abgedichteten Bereich auftrifft. Die an der ersten Nutseitenwand 29 der Hülse 4 anliegende axiale äußere Dichtlippe 24 kann ein Eindringen des Wassers in das Innere der Hülse 4 wirksam verhindern. Die gewählte Geometrie des Dichtkörpers 13, insbesondere die Vertiefung 26, hat zur Folge, dass die axiale äußere Dichtlippe 24 und auch die radiale äußere Dichtlippe 23 durch den Wasserdruck noch stärker gegen die erste Nutseitenwand 29 bzw. den Nutboden 28 gepresst werden. Dadurch wird ein Abheben der äußeren Dichtlippen 23 und 24 durch das auftreffende Wasser verhindert und eine hohe Dichtwirkung erreicht. Außerdem wird die axiale äußere Dichtlippe 24 durch die radial überstehende erste Nutseitenwand 29 der Dichtnut 27 teilweise gegen den auftreffenden Wasserstrahl abgeschirmt. Ohne die Einwirkung des Wasserdrucks werden die äußeren Dichtlippen 23 und 24 lediglich mit der vorgesehenen Vorspannung gegen den Nutboden 28 bzw. die erste Nutseitenwand 29 gepresst und unterliegen einer geringen Reibung und einem geringen Verschleiß. Lediglich wenn wegen äußerer Einwirkungen eine erhöhte Dichtwirkung erforderlich ist, wird der Anpressdruck der äußeren Dichtlippen 23 und 24 durch eben diese äußeren Einwirkungen erhöht. Insbesondere bei nur gelegentlich auftretenden derartigen Einwirkungen lassen sich auf diese Weise die Reibung und der Verschleiß der äußeren Dichtlippen 23 und 24 gering halten und dennoch eine zuverlässige Abdichtung gewährleisten.

Bei dem dargestellten Ausführungsbeispiel sind der Nutboden 28 als eine Radialfläche und die beiden Nutseitenwände 29 und 30 jeweils als eine Axialfläche ausgeführt. Für die Abdichtung sind lediglich der Nutboden 28 und die erste Nutseitenwand 29 erforderlich, so dass die zweite Nutseitenwand 30 auch entfallen kann und die Dichtnut 27 somit zu einer Stufe abgewandelt werden kann.

Weitere Abwandlungen sind dahingehend möglich, dass die radiale äußere Dichtlippe 23 nicht notwendiger Weise an einer Radialfläche und die axiale äußere Dichtlippe 24 nicht notwendiger Weise an einer Axialfläche anliegen müssen. Allerdings ist es für eine optimale Abdichtung unter den vorstehend genannten Bedingungen erforderlich, dass für die Fläche, an der die äußere axiale Dichtlippe 24 anliegt, der Axialanteil der Flächennormale größer ist als für die Fläche, an der die äußere radiale Dichtlippe 23 anliegt. Mit anderen Worten sind die Flächen so auszubilden, dass es bei der axialen äußeren Dichtlippe 24 zu einer stärker ausgeprägten axialen Abdichtung als bei der radialen äußeren Dichtlippe 23 und bei der radialen äußeren Dichtlippe 23 zu einer stärker ausgeprägten radialen Abdichtung als bei der axialen äußeren Dichtlippe 24 kommt.

Die beiden äußeren Dichtlippen 23 und 24 können auch an Flächen anliegen, die quer zur jeweiligen äußeren Dichtlippe 23 bzw. 24 gekrümmt ausgebildet sind. In diesem Fall wird den vorstehenden Betrachtungen eine mittlere Flächennormale des Berührungsbereichs zugrunde gelegt.

Die Zuverlässigkeit der Abdichtung wird dadurch noch weiter erhöht, dass der Dichtkörper 13 einen axialen Vorsprung 32 aufweist, der axial an einer das offene axiale Ende 9 bildende Stirnfläche der Hülse 4 anliegt.

Zudem weist der Dichtkörper 13 eine innere Dichtlippe 33 auf, die am Innenumfang der Hülse 4 anliegt und eine zusätzliche Barriere gegen eindringende Stoffe oder gegen austretendes Schmiermittel darstellt.

Die Montage des Wälzlagers 2 auf dem Zapfen 3 kann folgendermaßen durchgeführt werden:
Das Wälzlager 2 bestehend aus der Hülse 4, der Anlaufscheibe 5, den Wälzkörpern 6, der Tellerfeder 7 und dem Dichtring 8 wird als eine Einheit gehandhabt. Dies wird dadurch ermöglicht, dass die radiale äußere Dichtlippe 23 in die Dichtnut 27 der Hülse 4 eingreift und dadurch verliersicher an der Hülse 4 befestigt ist. Die Wälzkörper 6 werden durch die Tellerfeder 7 axial geklemmt, die sich hierzu auf den Dichtring 8 abstützt. Allerdings ist der Klemmdruck sehr gering, damit die radiale äußere Dichtlippe 23 nicht aus der Dichtnut 27 der Hülse 4 gepresst wird. Alternativ oder zusätzlich können die Wälzkörper 6 auch mittels eines Fetts, das zudem als Schmiermittel dient, fixiert werden.

Zur Montage wird der Zapfen 3 in das offene axiale Ende 9 der Hülse 4 eingeführt. Dabei stützt sich der Dichtring 8 über seinen axialen Vorsprung 32 auf der Hülse 4 ab. Die Sitzfläche 19 des Dichtkörpers 13 gleitet axial über den Zapfen 3 bis sie an der Gegenfläche 20 des Zapfens 3 anliegt. Die richtige Position ist dann erreicht, wenn der Dichtkörper 13 an der Schulter 21 des Zapfens 3 anschlägt. In dieser Position ist die Tellerfeder 7 gegenüber dem Zustand vor der Montage axial gestaucht und liegt mit einer axialen Vorspannung an den Wälzkörpern 6 an. Die Hülse 4 kann dann in der gewünschten Einbauumgebung positioniert werden und beispielsweise durch Einrasten eines Federrings in die Haltenut 12 fixiert werden.

### Bezugszeichen

- 1: Zapfenkreuz
- 2: Wälzlager
- 3: Zapfen
- 4: Hülse
- 5: Anlaufscheibe
- 6: Wälzkörper
- 7: Tellerfeder
- 8: Dichtring
- 9: offenes axiales Ende
- 10: geschlossenes axiales Ende
- 11: Boden
- 12: Haltenut
- 13: Dichtkörper
- 14: Stützring
- 15: innerer Rohrabschnitt
- 16: äußerer Flansch
- 17: innerer Flansch
- 18: äußerer Rohrabschnitt
- 19: Sitzfläche
- 20: Gegenfläche
- 21: Schulter
- 22: abgewinkelter Radialbereich
- 23: radiale äußere Dichtlippe
- 24: axiale äußere Dichtlippe
- 25: axialer Fortsatz
- 26: Vertiefung
- 27: Dichtnut
- 28: Nutboden
- 29: Nutseitenwand
- 30: Nutseitenwand
- 31: Radialvorsprung
- 32: axialer Vorsprung
- 33: innere Dichtlippe

## Patentansprüche

1. Wälzlager zur drehbaren Lagerung eines Zapfens (3), mit
- einer Hülse (4),
- Wälzkörpern (6), die in der Hülse (4) abrollen,
- einem Dichtring (8) und
- einer Tellerfeder (7), an der die Wälzkörper (6) axial anlaufen und die sich auf den Dichtring (8) axial abstützt,
**dadurch gekennzeichnet, dass** der Dichtring (8) eine Sitzfläche (19) für eine drehfeste Anordnung des Dichtrings (8) auf dem Zapfen (3) aufweist und der axiale Abstand zwischen der Tellerfeder (7) und den Wälzkörpern (6) radial nach außen wenigstens bereichsweise abnimmt.

2. Wälzlager nach Anspruch 1, **dadurch gekennzeichnet, dass** der Dichtring (8) einen Dichtkörper (13) und einen Stützring (14) aufweist.

3. Wälzlager nach Anspruch 2, **dadurch gekennzeichnet, dass** die Tellerfeder (7) berührend am Stützring (14) anliegt.

4. Wälzlager nach einem der Ansprüche 2 oder 3, **dadurch gekennzeichnet, dass** der Stützring (14) einen ersten Rohrabschnitt (15) aufweist.

5. Wälzlager nach Anspruch 4, **dadurch gekennzeichnet, dass** am ersten Rohrabschnitt (15) ein radial auswärts gerichteter erster Flansch (16) und/oder ein radial einwärts gerichteter zweiter Flansch (17) ausgebildet ist.

6. Wälzlager nach Anspruch 5, **dadurch gekennzeichnet, dass** der erste Flansch (16) wenigstens in einem Teilbereich seiner radialen Erstreckung außen am Dichtkörper (13) angeordnet ist, wobei der Teilbereich vorzugsweise größer als die halbe radiale Erstreckung des ersten Flansches (16) ist.

7. Wälzlager nach einem der Ansprüche 5 oder 6, **dadurch gekennzeichnet, dass** die Tellerfeder (7) am zweiten Flansch (17) berührend anliegt.

8. Wälzlager nach einem der Ansprüche 2 bis 7, **dadurch gekennzeichnet, dass** der Stützring (14) einen zweiten Rohrabschnitt (18) aufweist.

9. Wälzlager nach einem der Ansprüche 2 bis 8, **dadurch gekennzeichnet, dass** der Stützring (14) aus Metall gefertigt ist.

10. Wälzlager nach einem der vorhergehenden Ansprüche, **dadurch gekennzeichnet, dass** die Tellerfeder (7) einen abgewinkelten Radialbereich (22) aufweist.

11. Wälzlager nach Anspruch 10, **dadurch gekennzeichnet, dass** sich der abgewinkelte Radialbereich (22) bis zum maximalen Radius der Tellerfeder (7) erstreckt.

12. Wälzlager nach einem der Ansprüche 10 oder 11, **dadurch gekennzeichnet, dass** die Wälzkörper (6) im Bereich des abgewinkelten Radialbereichs (22) axial an der Tellerfeder (7) anlaufen.

13. Wälzlager nach einem der vorhergehenden Ansprüche, **dadurch gekennzeichnet, dass** der Dichtring (8) verliersicher an der Hülse (4) angebracht ist.

14. Wälzlager nach einem der vorhergehenden Ansprüche, **dadurch gekennzeichnet, dass** der Dichtring (8) wenigstens eine äußere Dichtlippe (23, 24) aufweist, die außen an der Hülse (4) anläuft und wenigstens eine innere Dichtlippe (33), die innen an der Hülse (4) anläuft.

15. Wälzlager nach einem der vorhergehenden Ansprüche, **dadurch gekennzeichnet, dass** der Dichtring (8) einen axialen Vorsprung (32) aufweist, der axial an der Hülse (4) anliegt.

16. Lageranordnung mit
- einer Hülse (4),
- einem Zapfen (3), der in der Hülse (4) drehbar gelagert ist,
- Wälzkörpern (6), die zwischen der Hülse (4) und dem Zapfen (3) abrollen,
- einem Dichtring (8) und
- einer Tellerfeder (7), die unter einer Vorspannung axial zwischen dem Dichtring (8) und den Wälzkörpern (6) eingespannt ist und die sich auf den Dichtring (8) axial abstützt,
**dadurch gekennzeichnet, dass** der Dichtring (8) dichtend und drehfest mit dem Zapfen (3) verbunden ist und der axiale Abstand zwischen der Tellerfeder (7) und den Wälzkörpern (6) radial nach außen wenigstens bereichsweise abnimmt.

17. Drehgelenk, **dadurch gekennzeichnet, dass** es mehrere Lageranordnungen nach Anspruch 16 aufweist, in denen je ein Zapfen (3) drehbar gelagert ist.

18. Verfahren zur Montage eines Wälzlagers (2), das eine Hülse (4), Wälzkörper (6), einen Dichtring (8), der verliersicher an der Hülse angebracht ist, und eine Tellerfeder (7) aufweist, auf einem Zapfen (3),
wobei der Zapfen (3) in die Hülse (4) eingeführt wird, **dadurch gekennzeichnet, dass** die Tellerfeder (7) bei der Annäherung des Dichtrings (8) an eine vorgegebene Sitzposition auf dem Zapfen (3), in der eine drehfeste und dichtende Fixierung des Dichtrings am Zapfen erreicht wird, durch eine mechanische Einwirkung des Dichtrings (8) auf die Tellerfeder (7) zunehmend gestaucht wird.

19. Verfahren nach Anspruch 18, **dadurch gekennzeichnet, dass** durch die Stauchung der Tellerfeder (7) eine vorgegebene Vorspannung eingestellt wird.

## Claims

1. Anti-friction bearing for rotatably mounting a journal (3), having
- a sleeve (4),
- rolling bodies (6) which roll in the sleeve (4),
- a sealing ring (8), and
- a cup spring (7), on which the rolling bodies (6) run axially and which is supported axially on the sealing ring (8),
**characterized in that** the sealing ring (8) has a seat face (19) for a torque-proof arrangement of the sealing ring (8) on the journal (3), and the axial spacing between the cup spring (7) and the rolling bodies (6) decreases radially to the outside at least in regions.

2. Anti-friction bearing according to Claim 1, **characterized in that** the sealing ring (8) has a sealing body (13) and a supporting ring (14).

3. Anti-friction bearing according to Claim 2, **characterized in that** the cup spring (7) bears with contact against the supporting ring (14).

4. Anti-friction bearing according to either of Claims 2 and 3, **characterized in that** the supporting ring (14) has a first tubular section (15).

5. Anti-friction bearing according to Claim 4, **characterized in that** a radially outwardly directed first flange (16) and/or a radially inwardly directed second flange (17) are/is configured on the first tubular section (15).

6. Anti-friction bearing according to Claim 5, **characterized in that** the first flange (16) is arranged, at least in a part region of its radial extent, on the outside on the sealing body (13), the part region preferably being greater than half the radial extent of the first flange (16).

7. Anti-friction bearing according to either of Claims 5 and 6, **characterized in that** the cup spring (7) bears with contact against the second flange (17).

8. Anti-friction bearing according to one of Claims 2 to 7, **characterized in that** the supporting ring (14) has a second tubular section (18).

9. Anti-friction bearing according to one of Claims 2 to 8, **characterized in that** the supporting ring (14) is manufactured from metal.

10. Anti-friction bearing according to one of the preceding claims, **characterized in that** the cup spring (7) has an angled-away radial region (22).

11. Anti-friction bearing according to Claim 10, **characterized in that** the angled-away radial region (22) extends as far as the maximum radius of the cup spring (7) .

12. Anti-friction bearing according to either of Claims 10 and 11, **characterized in that** the rolling bodies (6) run axially on the cup spring (7) in the region of the angled-away radial region (22).

13. Anti-friction bearing according to one of the preceding claims, **characterized in that** the sealing ring (8) is attached captively on the sleeve (4).

14. Anti-friction bearing according to one of the preceding claims, **characterized in that** the sealing ring (8) has at least one outer sealing lip (23, 24) which runs on the sleeve (4) on the outside and at least one inner sealing lip (33) which runs on the sleeve (4) on the inside.

15. Anti-friction bearing according to one of the preceding claims, **characterized in that** the sealing ring (8) has an axial projection (32) which bears axially against the sleeve (4).

16. Bearing arrangement having
- a sleeve (4),
- a journal (3) which is mounted rotatably in the sleeve (4),
- rolling bodies (6) which roll between the sleeve (4) and the journal (3),
- a sealing ring (8), and
- a cup spring (7) which is clamped axially between the sealing ring (8) and the rolling bodies (6) under a prestress, and which is supported axially on the sealing ring (8),
**characterized in that** the sealing ring (8) is connected in a sealing and torque-proof manner to the journal (3), and the axial spacing between the cup spring (7) and the rolling bodies (6) decreases radially to the outside at least in regions.

17. Rotary joint, **characterized in that** it has a plurality of bearing arrangements according to Claim 16, in which in each case one journal (3) is mounted rotatably.

18. Method for mounting an anti-friction bearing (2), which has a sleeve (4), rolling bodies (6), a sealing ring (8) which is attached captively on the sleeve, and a cup spring (7), on a journal (3),
the journal (3) being introduced into the sleeve (4), **characterized in that**, when the sealing ring (8) approaches a predefined seat position on the journal (3), in which seat position torque-proof and sealing fixing of the sealing ring on the journal is achieved, the cup spring (7) is compressed increasingly by way of a mechanical action of the sealing ring (8) on the cup spring (7).

19. Method according to Claim 18, **characterized in that** a predefined prestress is set by way of the compression of the cup spring (7).

## Revendications

1. Palier à roulement pour le support en rotation d'un pivot (3), avec
- une douille (4),
- des corps de roulement (6), qui roulent dans la douille (4),
- un anneau d'étanchéité (8), et
- une rondelle élastique (7), contre laquelle les corps de roulement (6) s'appliquent axialement et qui s'appuie axialement sur l'anneau d'étanchéité (8),
**caractérisé en ce que** l'anneau d'étanchéité (8) présente une face de siège (19) pour un agencement sans rotation de l'anneau d'étanchéité (8) sur le pivot (3) et la distance axiale entre la rondelle élastique (7) et les corps de roulement (6) diminue au moins localement radialement vers l'extérieur.

2. Palier à roulement selon la revendication 1, **caractérisé en ce que** l'anneau d'étanchéité (8) présente un corps d'étanchéité (13) et un anneau de soutien (14).

3. Palier à roulement selon la revendication 2, **caractérisé en ce que** la rondelle élastique (7) s'applique avec contact sur l'anneau de soutien (14).

4. Palier à roulement selon une des revendications 2 ou 3, **caractérisé en ce que** l'anneau de soutien (14) présente une première partie tubulaire (15).

5. Palier à roulement selon la revendication 4, **caractérisé en ce qu'**une première bride (16) dirigée radialement vers l'extérieur et/ou une seconde bride (17) dirigé radialement vers l'intérieur est/sont formée(s) sur la première partie tubulaire (15).

6. Palier à roulement selon la revendication 5, **caractérisé en ce que** la première bride (16) est disposée du moins dans une région partielle de son extension radiale extérieurement sur le corps d'étanchéité (13), dans lequel la région partielle est de préférence plus grande que la moitié de l'extension radiale de la première bride (16).

7. Palier à roulement selon une des revendications 5 ou 6, **caractérisé en ce que** la rondelle élastique (7) s'applique avec contact sur la seconde bride (17).

8. Palier à roulement selon l'une quelconque des revendications 2 à 7, **caractérisé en ce que** l'anneau de soutien (14) présente une deuxième partie tubulaire (18).

9. Palier à roulement selon l'une quelconque des revendications 2 à 8, **caractérisé en ce que** l'anneau de soutien (14) est fabriqué en métal.

10. Palier à roulement selon l'une quelconque des revendications précédentes, **caractérisé en ce que** la rondelle élastique (7) présente une région radiale coudée (22) .

11. Palier à roulement selon la revendication 10, **caractérisé en ce que** la région radiale coudée (22) s'étend jusqu'au rayon maximal de la rondelle élastique (7) .

12. Palier à roulement selon une des revendications 10 ou 11, **caractérisé en ce que** les corps de roulement (6) s'appliquent axialement sur la rondelle élastique (7) dans la zone de la région radiale coudée (22).

13. Palier à roulement selon l'une quelconque des revendications précédentes, **caractérisé en ce que** l'anneau d'étanchéité (8) est placé de façon imperdable sur la douille (4).

14. Palier à roulement selon l'une quelconque des revendications précédentes, **caractérisé en ce que** l'anneau d'étanchéité (8) présente au moins une lèvre d'étanchéité extérieure (23, 24), qui s'applique extérieurement sur la douille (4) et au moins une lèvre d'étanchéité intérieure (33), qui s'applique intérieurement sur la douille (4).

15. Palier à roulement selon l'une quelconque des revendications précédentes, **caractérisé en ce que** l'anneau d'étanchéité (8) présente une saillie axiale (32), qui s'applique axialement sur la douille (4).

16. Agencement de palier avec
- une douille (4),
- un pivot (3), qui est supporté de façon rotative dans la douille (4),
- des corps de roulement (6), qui roulent entre la douille (4) et le pivot (3),
- un anneau d'étanchéité (8) et
- une rondelle élastique (7), qui est serrée axialement sous une précontrainte entre l'anneau d'étanchéité (8) et les corps de roulement (6) et qui s'appuie axialement sur l'anneau d'étanchéité (8),
**caractérisé en ce que** l'anneau d'étanchéité (8) est assemblé au pivot (3) de façon étanche et sans rotation et la distance axiale entre la rondelle élastique (7) et les corps de roulement (6) diminue au moins localement radialement vers l'extérieur.

17. Articulation rotative, **caractérisée en ce qu'**elle présente plusieurs agencements de palier selon la revendication 16, dans chacun desquels un pivot (3) est respectivement supporté de façon rotative.

18. Procédé de montage d'un palier à roulement (2), qui présente une douille (4), des corps de roulement (6), un anneau d'étanchéité (8), qui est placé de façon imperdable sur la douille, et une rondelle élastique (7), sur un pivot (3), dans lequel le pivot (3) est introduit dans la douille (4), **caractérisé en ce que** la rondelle élastique (7) est de plus en plus repoussée par une action mécanique de l'anneau d'étanchéité (8) sur la rondelle élastique (7) lors de l'approche de l'anneau d'étanchéité (8) d'une position de siège prédéterminée sur le pivot (3), dans laquelle on atteint une fixation étanche et sans rotation de l'anneau d'étanchéité sur le pivot.

19. Procédé selon la revendication 18, **caractérisé en ce que** l'on règle une précontrainte prédéterminée par le refoulement de la rondelle élastique (7).
